# EUROPÄISCHE PATENTSCHRIFT

(11) **EP 0 668 693 B1**
(45) Veröffentlichungstag und Bekanntmachung des Hinweises auf die Patenterteilung: **06.05.1998**
(21) Anmeldenummer: 95101245.9
(22) Anmeldetag: 30.01.1995
(51) Int. Cl.: H04N 5/225

(54) **Videokamera mit Gehäuse**
Video camera with housing
Caméra vidéo avec boîtier

(30) Priorität: 18.02.1994 DE 9402650 U
(43) Veröffentlichungstag der Anmeldung: 23.08.1995
(73) Patentinhaber: SIEMENS AKTIENGESELLSCHAFT, 80333 München (DE)
(72) Erfinder: Lange, Horst, D-76189 Karlsruhe (DE); Stolberg, Dieter, D-76344 Eggenstein-Leopoldshafen (DE)

(56) Entgegenhaltungen:
- EP-A- 0 280 351
- DE-U- 9 107 917
- FR-A- 2 614 438
- FR-A- 2 614 493
- US-A- 4 414 576
- PATENT ABSTRACTS OF JAPAN vol. 018 no. 595 (E-1630) ,14.November 1994 & JP-A-06 225190 (TOSHIBA LIGHTING & TECHNOL CORP) 12.August 1994,
- PROTECTOR, Bd. 18,Nr. 1, 1.März 1990 ZÜRICH, CH, Seite 93 XP 000244411 'Kamerasystem'

## Beschreibung

Die Erfindung betrifft eine Videokamera gemäß dem Oberbegriff des Anspruchs 1.

Eine derartige Videokamera ist aus der FR-A-2 614 438 bekannt.

Aus der DE-U-91 07 917 ist ein Gehäuse mit EMV-dichtem Fenster bekannt, welches eine Scheibe mit einer aus feinmaschigem Metallgewebe hergestellten Zwischenlage und eine elektromagnetische Dichtung aus Metallgewebe aufweist.

Aus der EP-A-0 280 351 ist ein zweiteiliges Gehäuse für elektronische Geräte bekannt, welches eine Nut zur Aufnahme einer elektromagnetischen Dichtungsschnur mit Drahtgewirk in einem der beiden Teile aufweist.

Videokameras werden oft in einer Umgebung eingesetzt, welche die Funktion der empfindlichen, optischen und elektronischen Bauteile stört oder diese gar schädigt. Solche störenden oder schädigenden Einflüsse üben nicht nur Staub und aggressive Gase aus, sondern auch elektromagnetische Strahlung. Videokameras werden daher je nach Anwendung in Gehäuse eingebaut, die allseitig geschlossen sind und einen ausreichenden Schutz bieten. Die bekannten derartigen Gehäuse haben den Nachteil, daß Einstellungen von Hand an der Kamera und Wartungsarbeiten nur schwierig durchzuführen sind.

Der vorliegenden Erfindung liegt die Aufgabe zugrunde, eine Kamera mit einem Schutzgehäuse so zu gestalten, daß Arbeiten an der Kamera leicht durchgeführt werden können.

Erfindungsgemäß wird diese Aufgabe mit den im Anspruch 1 angegebenen Maßnahmen gelöst.

Das Gehäuseoberteil kann leicht abgenommen werden, da an ihm keine Leitungen oder Bauteile befestigt sind. Diese sitzen alle in dem Unterteil. Bei abgenommenem Oberteil ist die gesamte innere Frontseite, z. B. das Objektiv und darüber oder darunter angeordnete Bauteile, zugänglich.

In einer bevorzugten Ausgestaltung gemäß Anspruch 4 sind das Gehäuse, das Fenster und die Stoßstellen zwischen dem Ober- und dem Unterteil so gestaltet, daß die Kamera auch gegen elektromagnetische Felder geschützt ist.

Anhand der Zeichnung werden im folgenden die Erfindung sowie Ergänzungen und Weiterbildungen näher beschrieben und erläutert. In den abhängigen Ansprüchen sind weitere Ausgestaltungen der Erfindung angegeben.

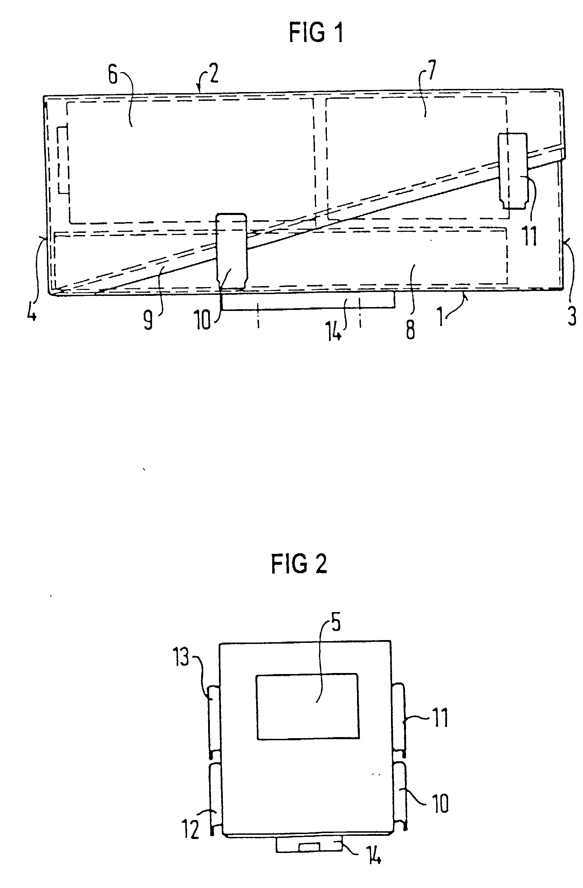

Die Figuren 1 und 2 zeigen ein Ausführungsbeispiel in einer Seiten- und einer Frontansicht.

Ein quaderförmiges Gehäuse einer Videokamera besteht aus einem Unterteil 1 und einem Oberteil 2. Das Oberteil 2 ist an der Vorderseite nach unten gezogen, das Unterteil an der Rückseite nach oben, derart, daß die Rückwand 3, an welcher die Durchführungen von Anschlußleitungen sitzen, Bestandteil des Unterteils und die Vorderwand 4 mit einem Fenster 5, hinter dem das Kameraobjektiv sitzt, Bestandteil des Oberteils ist. An der Unterseite des Unterteils ist eine Halterung 14 angebracht, mit der die Kamera auf einen Sockel oder einen Schwenkantrieb montiert werden kann.

Das Gehäuse enthält im wesentlichen drei Bauteile, ein Bauteil 6 mit dem Objektiv, den Bildwandler und gegebenenfalls elektronische Bauelementen, ein elektronischer Teil 7 und ein Akkumulator oder eine Batterie 8, die am Boden des Gehäuses untergebracht ist und hinten eine Steckverbindung aufweist. Die elektrischen und optischen Bauteile 6, 7, 8 sind ausschließlich auf dem Unterteil montiert. Ober- und Unterteil 1, 2 werden mit Schnappverschlüssen oder Schnallen 10, 11, 12, 13 zusammengehalten . Das Fenster 5 kann eingeklebt sein. Zwischen den beiden Teilen liegt eine Dichtung 9, vorzugsweise in einer am oberen Rand des Unterteils umlaufenden Nut, in welcher der untere Rand des Oberteils 2 sitzt. Das Gehäuse ist daher allseitig dicht geschlossen und die Bauteile 6, 7, 8 der Kamera sind vor Umgebungseinflüssen geschützt.

Da das Oberteil 2 keine elektrischen Bauteile und auch keine Anschlüsse aufweist, kann es nach Öffnen der Schnappverschlüsse 10, 11, 12 und 13 ohne weiteres abgenommen werden. Infolge der besonderen Ausbildung des Gehäuses, bei der die Frontseite im wesentlichen Bestandteil des Oberteils ist und die Seitenflächen entlang einer Linie aufeinanderstoßen, die schräg von vorn unten nach hinten oben verlaufen, ist das Bauteil 6 mit dem Kameraobjektiv und auch das Bauteil 7 zugänglich, so daß Einstell- und Wartungsarbeiten an der Kamera vorgenommen werden können. Die Batterie bzw. der Akkumulator 8 kann von vorn ohne weiteres ausgewechselt werden.

## Patentansprüche

1. Videokamera mit einem quaderförmigen Schutzgehäuse, dessen Vorderwand (4) ein Fenster (5) enthält, hinter dem das Kameraobjektiv angeordnet ist, und das aus einem Unterteil (1) und einem auf dieses aufsetzbaren Oberteil (2) besteht, wobei die Seitenflächen der beiden Teile (1, 2) entlang von Linien aufeinandersitzen, die von vorne nach hinten schräg verlaufen, und wobei die elektrischen und optischen Bauteile (6, 7, 8) der Kamera auf dem Unterteil (1) montiert sind, das Leitungsdurchführungen aufweist, **dadurch gekennzeichnet,** daß die Linien, entlang derer die Teile (1, 2) aufeinandersitzen, von vorne unten nach hinten oben verlaufen, daß die Vorderwand (4) Bestandteil des Oberteils (2) ist und daß die Rückwand (3) des Schutzgehäuses Bestandteil des Unterteils (1) ist und die Leitungsdurchführungen aufweist.

2. Videokamera nach Anspruch 1, **dadurch gekennzeichnet,** daß im Unterteil (1) ein Akkumulator (8) oder eine Batterie enthalten ist, die bei abgenommenem Oberteil (2) von vorn entnehmbar und einschiebbar ist.

3. Videokamera nach Anspruch 2, **dadurch gekennzeichnet,** daß der Akkumulator (8) oder die Batterie am Boden des Unterteils (1) und darüber das Objektiv (6) mit dem Bildwandler sowie die elektrischen Bauteile (7) angeordnet sind.

4. Videokamera nach einem der Ansprüche 1 bis 3, **dadurch gekennzeichnet,** daß das Ober- und das Unterteil (1, 2) aus Metall, vorzugsweise aus Edelstahl bestehen, daß das Fenster (5) aus einer Glasscheibe besteht, dessen Innenseite mit einem engmaschigen Metallnetz überzogen ist, das entlang des gesamten Umfanges des Fensters mit dem Metall des Oberteils elektrisch verbunden ist und daß zwischen die aneinanderstoßenden Flächen des Ober- und des Unterteils eine elektromagnetische Dichtung (9) gelegt ist.

5. Videokamera nach Anspruch 4, **dadurch gekennzeichnet,** daß entlang des oberen Randes des Unterteils (1) eine Nut verläuft, in welcher die elektromagnetische Dichtung liegt, und daß der untere Rand des Oberteils auf der elektromagnetischen Dichtung (9) sitzt.

6. Videokamera nach Anspruch 5, **dadurch gekennzeichnet,** daß die elektromagnetische Dichtung (9) ein Metallgeflecht ist.

7. Videokamera nach einem der Ansprüche 1 bis 6, **dadurch gekennzeichnet,** daß das Gehäuse mittels Schnallen (10, 11, 12, 13) verschließbar ist.

## Claims

1. Video camera with a cuboid protective housing, the front wall (4) of which includes a window (5), behind which the camera lens system is arranged, and which housing comprises a lower part (1) and an upper part (2) which can be mounted thereon, whereby the lateral surfaces of the two parts (1, 2) are disposed one on the other along lines which extend diagonally from the front to the rear, and whereby the electrical and optical components (6, 7, 8) of the camera are mounted on the lower part (1) which has cable bushings, characterized in that the lines along which the parts (1, 2) are disposed one on the other extend from the front bottom to the rear top, in that the front wall (4) is a component part of the upper part (2) and in that the rear wall (3) of the protective housing is a component part of the lower part (1) and has the cable bushings.

2. Video camera according to claim 1, characterized in that in the lower part (1) an accumulator (8) or a battery is contained which can be removed and inserted from the front when the upper part (2) is removed.

3. Video camera according to claim 2, characterized in that the accumulator (8) or the battery is arranged on the floor of the lower part (1) and above it the lens system (6) with the image converter and the electrical components (7) are arranged.

4. Video camera according to one of claims 1 to 3, characterized in that the upper part and the lower part (1, 2) consist of metal, preferably high-grade steel, in that the window (5) comprises a glass pane, the inner side of which is covered with a narrow-meshed metal net which is electrically connected to the metal of the upper part along the entire circumference of the window and in that between the surfaces of the upper part and lower part which abut each other an electromagnetic seal (9) is placed.

5. Video camera according to claim 4, characterized in that a groove extends along the upper edge of the lower part (1), in which groove the electromagnetic seal lies, and in that the lower edge of the upper part is disposed on the electromagnetic seal (9).

6. Video camera according to claim 5, characterized in that the electromagnetic seal (9) is a metal mesh.

7. Video camera according to one of claims 1 to 6, characterized in that the housing can be closed by means of clasps (10, 11, 12, 13).

## Revendications

1. Caméra vidéo comportant un boîtier de protection parallélépipèdique, dont la paroi (4) avant comporte une fenêtre (5), derrière laquelle est monté l'objectif de la caméra, et qui est constitué d'une pièce (1) inférieure et d'une pièce (2) supérieure pouvant être enfilée sur la pièce (1) inférieure, les surfaces latérales des deux pièces (1, 2) étant montées l'une sur l'autre suivant des lignes qui s'étendent en biais de l'avant vers l'arrière, et les composants (6, 7, 8) électriques et optiques de la caméra étant montés sur la pièce (1) inférieure, qui comporte des traversées pour les conducteurs, caractérisée en ce que les lignes suivant lesquelles les pièces (1, 2) sont montées l'une sur l'autre s'étendent de l'avant en bas vers l'arrière en haut, en ce que la paroi (4) avant fait partie de la pièce (2) supérieure et en ce que la paroi (3) arrière du boîtier de protection fait partie de la pièce (1) inférieure et comporte les traversées pour les conducteurs.

2. Caméra vidéo suivant la revendication 1, caractérisée en ce que la pièce (1inférieure comporte un accumulateur (8) ou une batterie, qui, lorsque la pièce (2) supérieure est retirée, peut être retirée et enfilée de l'avant.

3. Caméra vidéo suivant la revendication 2, caractérisée en ce que l'accumulateur (8) ou la batterie sont montés au fond de la pièce (1) inférieure et en ce que sont montés au-dessus de cet accumulateur ou de cette batterie l'objectif (6) comportant le transformateur d'images ainsi que les composants (7) électriques.

4. Caméra vidéo suivant l'une des revendications 1 à 3, caractérisée en ce que la pièce (1) inférieure et la pièce (2) supérieure sont en métal, de préférence en acier fin, en ce que la fenêtre (5) est constituée d'une vitre dont la face intérieure est revêtue d'un réseau métallique à maille serrée, qui est relié de manière conductrice de l'électricité au métal de la pièce supérieure sur tout le pourtour de la fenêtre, et en ce qu'un dispositif (9) d'étanchéité électromagnétique est placé entre les surfaces contiguës de la pièce supérieure et de la pièce inférieure.

5. Caméra vidéo suivant la revendication 4, caractérisée en ce qu'il s'étend le long du bord supérieur de la pièce (1) inférieure une rainure dans laquelle se trouve le dispositif d'étanchéité électromagnétique et en ce que le bord inférieur de la pièce supérieure se tient sur le dispositif (9) d'étanchéité électromagnétique.

6. Caméra vidéo suivant la revendication 5, caractérisée en ce que le dispositif (9) d'étanchéité électromagnétique est un grillage métallique.

7. Caméra vidéo suivant l'une des revendications 1 à 6, caractérisée en ce que le boîtier peut être fermé au moyen d'agrafes (10, 11, 12, 13).
